# EUROPEAN PATENT SPECIFICATION

(11) **EP 2 251 817 B1**
(45) Date of publication and mention of the grant of the patent: **27.04.2016**
(21) Application number: 10162329.6
(22) Date of filing: 07.05.2010
(51) Int. Cl.: G06K 7/00

(54) **Device for detecting the presence of transponders**
Vorrichtung zur Feststellung der Präsenz von Transpondern
Dispositif de détection de la présence de transpondeurs

(30) Priority: 11.05.2009 IT MI20090795
(43) Date of publication of application: 17.11.2010
(73) Proprietor: MICROHARD S.R.L., 20028 San Vittore Olona (Prov. of Milano) (IT)
(72) Inventor: Ricci, Claudio, 20025, LEGNANO MI (IT)
(74) Representative: Modiano, Micaela Nadia

(56) References cited:
- EP-A- 1 840 790

## Description

The present invention relates to a device for detecting the presence of transponders, particularly of a low-frequency transponder and/or of a high-frequency transponder proximate to said device.

Passive transponders are used widely to identify people and objects. This technology is known generally by the acronym RFID (Radio Frequency IDentification).

Passive RFID systems are composed of a passive transponder and a circuit for reading or writing said transponder. The read or write circuit generates an oscillating magnetic or electromagnetic field that transfers energy to the passive transponder. The modulation of this field allows a two-way exchange of data.

Several RFID standards are currently in use and each one is characterized by a specific communications protocol and by a specific oscillation frequency of the magnetic or electromagnetic field.

Known RFID systems are powered by batteries that are integrated in the system itself and include a circuit for low-power detection of a transponder that is capable of detecting the presence of passive transponders if they are proximate to the RFID read or write circuit.

These systems detect the presence of a single type of passive transponder by analyzing the variation of the characteristic oscillations of the antenna that composes the system by means of a comparison between the case in which the passive transponder is present nearby and the reference case in which it is absent.

A known type of device adapted to detect the presence of a generic passive transponder is disclosed in US6982645 or in EP 1394720.

Moreover, several RFID standards are in use, in particular RFID systems that use a magnetic field that oscillates at frequencies comprised between 119 kHz and 135 kHz (generally known as Low-Frequency Identification or LowRFID or low frequency RFID) and systems that use a magnetic field that oscillate at a frequency that is centered around 13.56 MHz (generally known as High-Frequency Identification or HighRFID or high frequency RFID).

The person skilled in the art can recognize in the indication of these frequencies two of the main groups of transponders used in several industrial standards, such as for example ISO/IEC 18000-2, ISO/IEC 14443A, ISO/IEC 14443B, ISO/IEC 15693 and others.

Known devices for detecting the presence of transponders of the magnetic type suffer the drawback that they work only for transponders that operate at a certain frequency and are not adapted to detect transponders that operate at mutually different frequencies. EP-A-1 840 790 discloses the feauters of the preamble of claim 1.

The aim of the present invention is to provide a device that is adapted to detect the presence of a transponder that operates at a certain frequency (for example a HighRFID or a LowRFID) and also distinguish between the presence of transponders that operate at different frequencies (for example a HighRFID and a LowRFID), preferably without the need for any contact between the transponder and the device.

Within this aim, an object of the invention is to provide a device that can be powered by batteries and has a reduced consumption so as to spare said batteries and extend their life.

Another object of the invention is to provide a device that does not require the presence of additional components to detect a low-frequency transponder with respect to those required to detect a high-frequency transponders.

Another object of the invention is to provide a device that is highly reliable, relatively easy to provide and at competitive costs.

This aim, as well as these and other objects that will become better apparent hereinafter, are achieved by a device according to claim 1.

The aim and objects cited above are further achieved by a method Z according to claim 7.

Further characteristics and advantages of the invention will become better apparent from the description of a preferred but not exclusive embodiment of the device according to the invention, illustrated by way of 4 non-limiting example in the accompanying drawings, wherein:

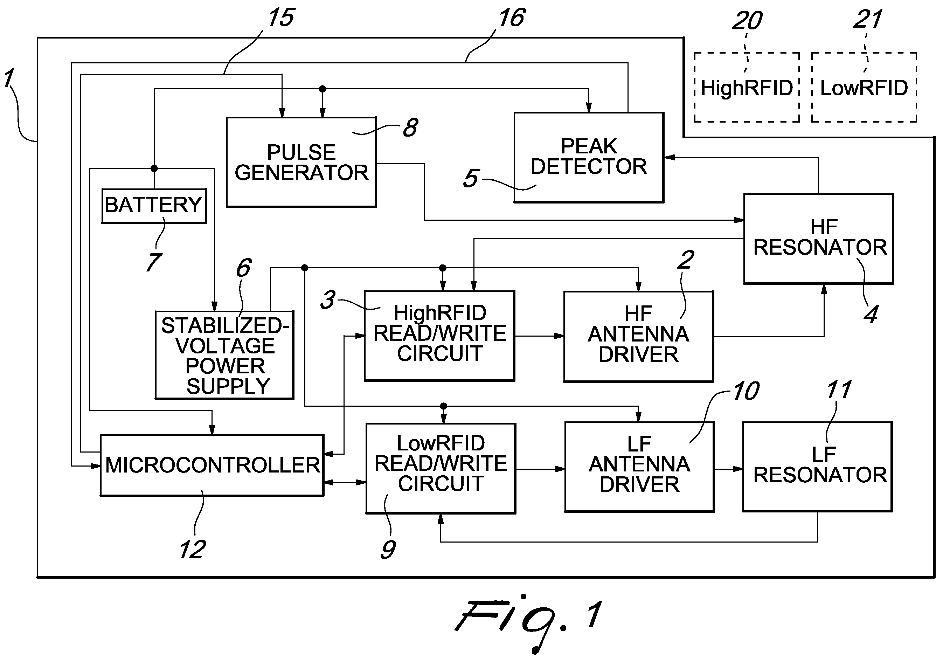

Figure 1 is a block diagram of an embodiment of the device according to the invention;

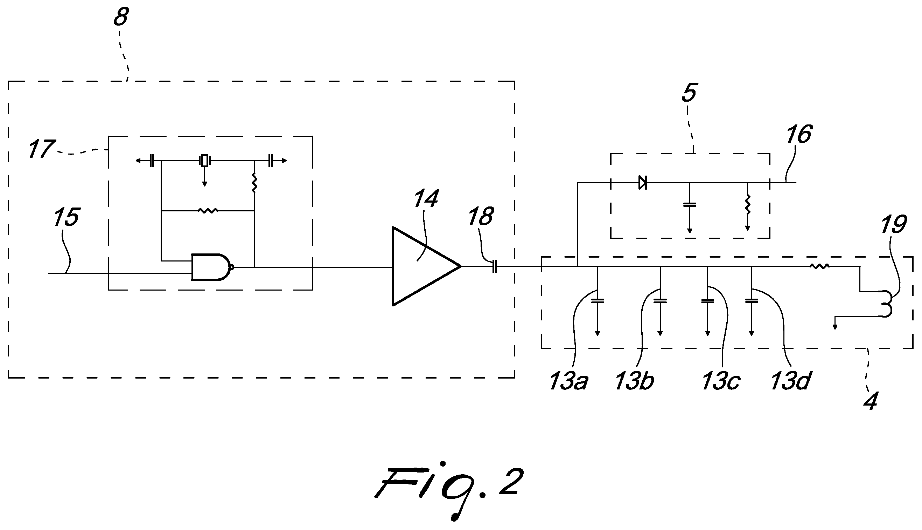

Figure 2 is a detail view of the portion of the device that contains the pulse generator, the first resonator and the peak detection circuit;
Figure 3 plots the amplitude detected by the peak detection circuit of the oscillating signal generated by the first resonator in the absence of transponders and the amplitude of the oscillating signal generated by the first resonator in the presence of the first type of transponder, and the periodic time behavior of the pulses fed to the first resonator;
Figure 4 plots the amplitude detected by the peak detection circuit of the oscillating signal generated by the first resonator in the absence of transponders and the amplitude of the oscillating signal generated by the first resonator in the presence of the second type of transponder, and the periodic time behavior of the pulses fed to the first resonator;
Figure 5 illustrates a method according to the present invention.

With reference to the figures, the device according to the invention, generally designated by the reference numeral 1, comprises a voltage pulse generator 8, which is connected to a first resonator 4, which in turn is connected to a circuit 5 that is adapted to measure the amplitude of an oscillating signal that is generated by the first resonator 4 in response to the pulses. Preferably, the measured amplitude is a voltage and the circuit 5 is a peak detector.

The power source of the device 1 can be constituted by a battery 7 and by a stabilized-voltage power supply 6, both of which are of a known type.

The pulse generator 8 comprises a high-frequency oscillator 17 of a known type, which oscillates, generating pulses at a preset repetition frequency *ƒ_{osc}* (for example equal to 13.5 MHz) and by an amplifier 14, which injects, across a capacitor 18, the voltage pulses into the first resonator 4.

The first resonator 4 is preferably of the LC type and comprises an inductor 19, which is tuned by means of capacitors in parallel 13a, 13b, 13c and 13d to a first resonance frequency *ƒ*₁, which is slightly lower than the repetition frequency *ƒ_{osc}* of the oscillator 17 contained in the pulse generator 8. The frequency *ƒ_{osc}* can be chosen substantially equal, although not identical, to the frequency of the HighRFID transponder 20, which is generally comprised between 13.3 MHz and 14 MHz.

Preferably, the first resonance frequency *ƒ*1 is lower by at most 20% than *ƒ_{osc}*, even better lower by at most 10%, more preferably lower by at most 5% and even more preferably lower by at most 2%. For example, in the case of a repetition frequency of the excitation pulses of the first resonator 4 equal to 13.5 MHz, the first resonance frequency *ƒ*₁ is tuned to 13.2 MHz.

A resonance frequency value *ƒ*₁, that is certain lower than, but in any case close to, *ƒ_{osc}* offers the advantage of an efficient transfer of energy from the power source to the first resonator 4, and this leads to a higher saving of the battery 7.

By means of a first electrical connection 15, the pulse generator 8 is activated by a processing unit, for example a microcontroller 12, so that packets 23 of pulses 22 are generated periodically only for a certain portion of a period of time T, thus supplying power to the first resonator 4 only at certain instants.

The period of repetition T of the packets of pulses 23 can be 125 ms, while the duration of the packet of pulses 23 can be much shorter than this period, for example equal to approximately 30 µs.

The microcontroller 12 is therefore adapted to switch off periodically the pulse generator 8, leaving the first resonator 4 free to continue to oscillate freely. The duration of the pulse packet 23 must in any case be such that the pulse generator 8 can transfer to the first resonator 4 enough power to allow the first resonator 4 to reach an amplitude of the oscillating signal that causes the peak detection circuit 5 to reach a voltage that is adequate for the devices connected downstream. This voltage is then supplied to the microcontroller 12 by means of an adapted connection 16 between said microcontroller and the peak detection circuit 5 in order to achieve the effects of the invention.

Preferably, the peak detection circuit 5 comprises a capacitor that is charged to the instantaneous voltage across the first resonator 4. This voltage value is then passed, by means of the electrical connection 16, to the microcontroller 12, where it is converted into a numeric value.

The device 1 furthermore comprises a first circuit 3 for reading/writing a first type of high-frequency transponder 20, which is preferably of the HighRFID type, i.e., operating at a frequency of 13.56 MHz.

The first read/write circuit 3 receives power from the stabilized-voltage power supply 6 and has a further input connected to the first resonator 4, which is meant to read the data stored in the first type of transponder 20. In order to activate the reading and/or writing functions, described hereafter, the first circuit 3 is connected to the microcontroller 12.

The first read/write circuit 3 is further connected to a first driver 2 for driving the first resonator 4, so as to allow the transfer of power and the writing of data on the first type of transponder 20 by means of the first resonator 4. The first read/write circuit 3 and the first driver 2 are of a known type or in any case can be designed easily by the person skilled in the art and therefore are not described in detail.

In order to be able to perform any reading/writing of a second type of transponder 21 that operates at a frequency that is different from the first type of transponder 20, for example at low frequency, such as the frequency of a LowRFID transponder that operates at 125 kHz, the device 1 can comprise a second read/write circuit 9, which also is connected to the microcontroller 12, and a second LC resonator 11, which is tuned to a frequency that is substantially equal, but not identical, to the frequency of the second type of transponder 21, for example tuned to 125 kHz. The second read/write circuit 9 comprises an input which is connected to the second resonator 11, so as to read the data contained in the second type of transponder 21, and is furthermore connected to a second driver 10 for driving the second resonator 11, so as to allow the transfer of power and the writing/reading of data on the second type of transponder 21, again by means of the second resonator 11. The second read/write circuit 9 and the second driver 10 also are of a known type or in any case can be designed easily by the person skilled in the art: therefore they are not described in detail.

It should be noted that the first HighRFID read/write circuit 3 and the first high-frequency driver 2 have been shown as two distinct blocks, but actually they can also be integrated into a single component that is commonly commercially available. The same remark applies to the second read/write circuit 9 and the second low-frequency driver 10.

In addition to normal activities for management of the reading/writing of the transponders, the microcontroller 12 is conveniently designed to detect and discriminate the presence of transponders of the first type 20 from the presence of transponders of the second type 21 on the basis of a negative and positive variation, respectively, of the amplitude of the oscillating signal generated by the first resonator 4 with respect to the amplitude of the same oscillating signal 24 generated in the absence of transponders.

Measurement of the amplitude of the oscillating signal generated by the first resonator 4 is performed at each cycle T of power injection in the form of packets of pulses 23 and the numeric values are stored within the microcontroller 12.

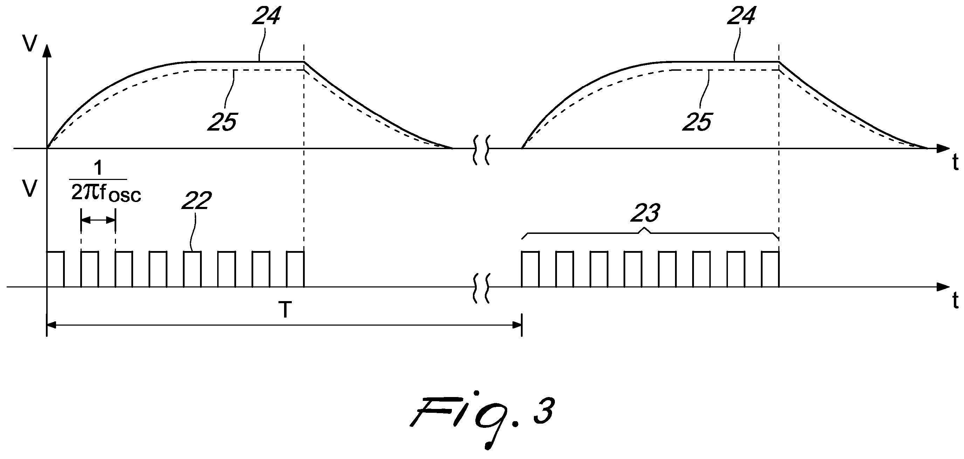

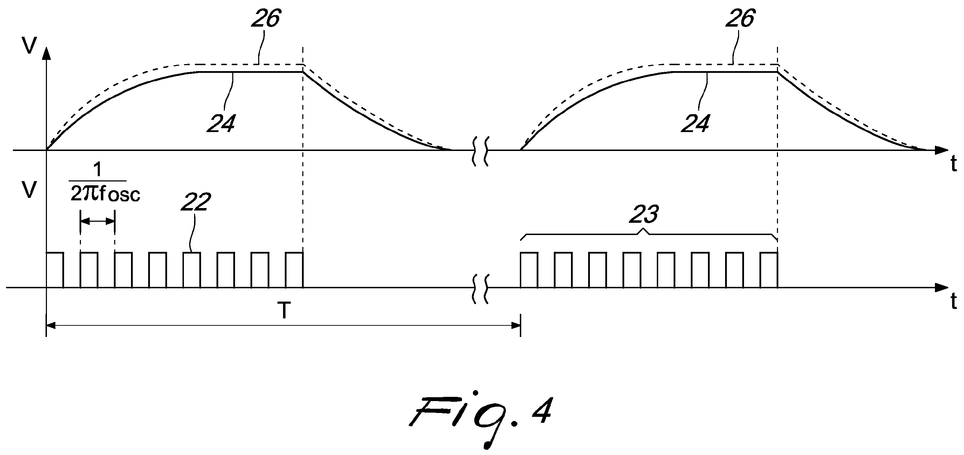

If no passive transponder is in the vicinity of the device 1, the voltage measured by the peak detection circuit 5 across the first resonator 4 in response to excitation by each packet of pulses 23 has a behavior over time that can be likened to the curve 24, which is shown in Figures 3 and 4. In the absence of transponders, if the measurement instant, the conditions of power transfer from the pulse generator 8, the physical properties of the first resonator 4 and the environmental conditions in which the first resonator 4 works are all equal, the measurement of the amplitude of the signal 24 is constant.

If the high-frequency passive transponder 20 is placed in the vicinity of the first resonator 4, which as mentioned is tuned to a frequency that is close to, but in any case lower than, the repetition frequency of the pulses emitted by the generator 8, the voltage detected by the peak detector 5 has a behavior plotted by the curve 25, whose amplitude is smaller than that of the curve 24 in the absence of transponders.

The numeric amplitude value sampled by the microcontroller 12 is therefore lower than the value measured at the same sampling instant in the absence of transponders in the vicinity of the first resonator 4.

The microcontroller 12, after verifying the reduction of the measured voltage value with respect to the value stored in the absence of transponders, interrupts the cycle of power injection to the first resonator 4 and activates the stabilized-voltage power supply 6 and the first HighRFID read/write circuit 3, which drives, by means of the first driver 2, the first resonator 4, gaining in practice control of the operations thereon and thus being able to interface directly with the HighRFID transponder 20 in order to read information from it or write new information to it.

If instead a LowRFID low-frequency passive transponder 21 is placed in the vicinity of the first resonator 4, the amplitude of the signal 26 detected by the peak detection circuit 5 on the first resonator 4 is generally higher than the frequency of the corresponding signal 24 in the absence of transponders.

The microcontroller 12, having verified in this second case the increase in the measured voltage value with respect to the value stored in the absence of transponders, interrupts the cycle of power injection to the first resonator 4 and activates the stabilized-voltage power supply 6 and the second read/write circuit 9, which drives, by means of the second driver 10, the second resonator 11.

The second read/write circuit 9 can thus interface directly with the LowRFID transponder 21 to read information from it or write new information to it.

The possibility to observe the difference in behavior described above in the two cases is due to the choice to tune the first resonator 4 to a frequency *ƒ*₁ that is lower, albeit slightly, than the repetition frequency *ƒ_{osc}* of the pulses emitted by the generator 8.

Preferably, the frequency *ƒ*₁ to which the first resonator 4 is tuned is not too low with respect to the pulse repetition frequency *ƒ_{osc}*, because otherwise there would be a reduction in the operating distance of the device 1, i.e., the voltage variation detected in the presence of the transponders 20 or 21 would be too small and difficult to observe except with complex and/or expensive circuit solutions.

The person skilled in the art can understand easily that the assessment of the frequency value *ƒ*₁ to which the first resonator 4 is to be tuned takes into account the tolerances of the individual components used in the device, such as for example the capacitors 13a, 13b, 13c and 13d or the inductor 19 contained in the first resonator 4. In particular, the choice of the first frequency *ƒ*₁ must be such as to provide for correct reading of the reduction and/or increase in the value of the amplitude of the oscillating signal generated by the first resonator even in the worst case in which the values of the capacitors of the first resonator 4 differ from the nominal capacitance by a value that is equal to the maximum tolerance.

It is furthermore preferable to find a compromise between an acceptable working distance of the device and the choice of components that are not too expensive. The use of components with narrow tolerances in fact allows to tune the first resonator 4 to a frequency *ƒ*₁ that is certainly very close to the pulse repetition frequency *ƒ_{osc}*, thus achieving a greater working distance, but with higher costs due to the high price of components with narrow tolerances.

On the other hand, using components with wider tolerances would entail the risk of tuning incorrectly the first resonator 4 to a frequency that is believed to be lower than *ƒ_{osc}* but instead in actual fact is higher.

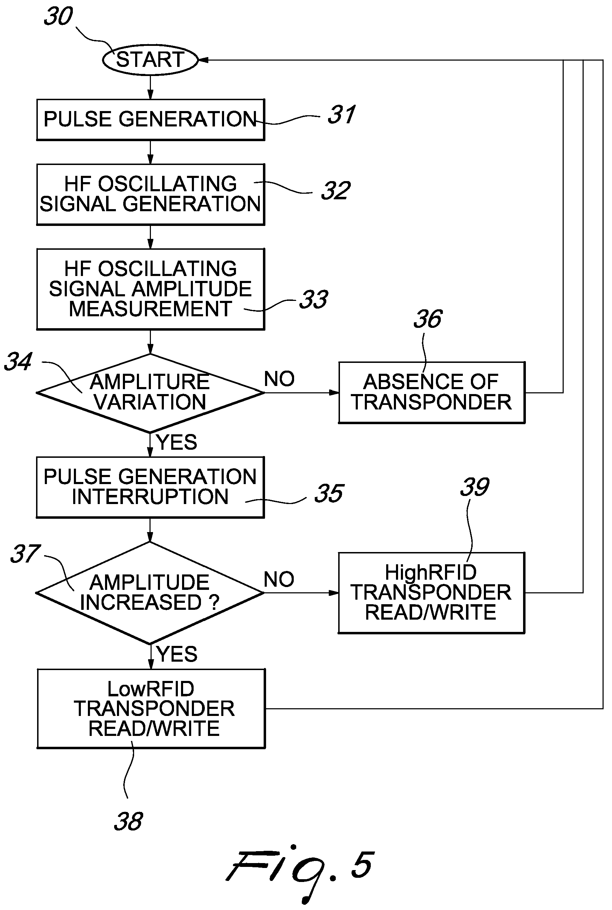

On the basis of the above description, it can be understood that the device 1 according to the invention operates substantially as shown in Figure 5. After the start 30, the generation of pulses is activated in step 31 and the pulses are fed to the first resonator 4 in the form of packets 23 which are repeated periodically in time at an interval T.

Then, in step 32, a high-frequency oscillating signal is generated by the first resonator 4 in response to these pulses.

Subsequently, the amplitude of the voltage signal that is present across the first resonator 4 is measured in step 33, for example by sampling at a preset instant the signal detected by the peak detection circuit 5, as described earlier. In step 34, any variation of the amplitude of said voltage signal with respect to the amplitude measured in case of the absence of transponders is thus evaluated. If the microcontroller 12 detects no amplitude variation, the absence of transponders in the vicinity of the device 1 is confirmed in step 36 and the procedure returns to step 30.

If instead the microcontroller 12 records a variation in the amplitude of the voltage signal, pulse generation is interrupted by the low-power microcontroller 12 in step 35 and then, in step 37, the microcontroller evaluates which type of amplitude variation has been recorded.

If the amplitude is lower than the stored one, in step 39 the first circuit 3 for reading/writing the HighRFID transponder 20 is activated. If instead the amplitude is higher, in step 38 the second circuit 9 for reading/writing the LowRFID transponder 21 is activated.

In both cases, at the end of the read/write operations, the procedure returns to the initial step 30.

In practice it has been found that the device according to the invention fully achieves the intended aim, since it is capable of detecting transponders and also discriminating the presence of a low-frequency transponder from the presence of a high-frequency transponder, activating the corresponding read/write circuits, without wasting power, since conveniently only the read/write circuit that corresponds to the only one of the two transponders that is detected is activated.

This achieves two important goals, such as low power consumption, which makes the device adapted to operate with reduced energy consumption, and the coexistence of two different read/write circuits of two transponders that operate at different frequencies in a same device.

Furthermore, a transponder, be it of the high- or low-frequency type, can be detected at each power injection cycle, thus reducing latency in response times. This allows to increase the time interval comprised between two successive power injection cycles to a maximum value that is optionally compatible with the need for swift operation. In other words, the user in this case perceives as swift the detection of the presence of the transponder, because there is a single detection circuit for both transponder types. If instead there were two separate circuits for detecting low- and high-frequency transponders, they would have to be activated one at a time and thus, for an equal power consumption, the response time for detection of each of the two would be doubled. Therefore, to obtain similar performance in terms of time latency between the two devices, in the second case the power injection cycles would have to be more frequent, leading to higher power consumption.

The device thus conceived is susceptible of numerous modifications and variations, all of which are within the scope of the appended claims; all the details may further be replaced with other technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) adapted for detecting the presence, proximate to said device (1), of at least one between a first type of transponder (20) and a second type of transponder (21), said first type of transponder (20) operating at a high frequency and said second type of transponder (21) operating at a low-frequency, said device (1) comprising:
- a pulse generator (8), which is adapted to generate pulses (22) at a preset repetition frequency;
- a first resonator (4), which is tuned to a first resonance frequency and is connected to said pulse generator (8), so as to generate an oscillating signal (24, 25, 26) in response to said pulses (22); and
- a circuit (5) for measuring the amplitude of said oscillating signal (24, 25, 26) connected to said first resonator (4);
**characterized in that** said first resonance frequency is lower by no more than 20% than said pulse repetition frequency, said device (1) comprising means (12) for detecting the presence of said first type of transponder (20) or of said second type of transponder (21), said means (12) being adapted to discriminate the presence of said first type of transponder (20) with respect to the presence of said second type of transponder (21) on the basis of a respectively negative and positive variation of the amplitude of said oscillating signal (25, 26) with respect to the amplitude of said oscillating signal (24) in the absence of said transponders.

2. The device according to one or more of the preceding claims, **characterized in that** said pulse generator circuit (8) comprises an oscillator (17) that operates at said repetition frequency.

3. The device according to one or more of the preceding claims,
wherein said high frequency is substantially equal to 13.56 MHz and said low-frequency is comprised between 119 kHz and 135 kHz.

4. The device according to one or more of the preceding claims, **characterized in that** it comprises:
- a processing unit (12), which is connected to said measurement circuit (5) and to said pulse generator (8);
- a second resonator (11), which is tuned to a second resonance frequency that is substantially equal to said low-frequency;
- a first read/write circuit (3) of said first type of transponder (20) connected to said first resonator (4);
- a second read/write circuit (5) of said second type of transponder (21) connected to said second resonator (11);
said processing unit (12) being adapted to supply only the first read/write circuit (3) or only the second read/write circuit (9) if said variation of the amplitude of the oscillating signal (25, 26) is respectively negative or positive.

5. The device according to one or more of the preceding claims, **characterized in that** said processing unit (12) is furthermore adapted to deactivate said pulse generator (8) when said measurement circuit (5) detects said amplitude variation of the oscillating signal (25, 26).

6. The device according to one or more of the preceding claims, wherein said pulse generator (8) is adapted to generate periodically packets (23) of said pulses (22) and to interrupt periodically the generation of said pulses (22), said packets (23) of pulses (22) having such a duration as to allow a transfer of energy to the first resonator (4) such that the amplitude of said oscillating signal (24, 25, 26) can be detected by said measurement circuit (5).

7. A method for detecting the presence of at least one between a first type of transponder (20) and a second type of transponder (21), said first type of transponder (20) operating at a high frequency and said second type of transponder (21) operating at a low-frequency, comprising the steps of:
- generating (31) pulses (22) at a preset repetition frequency;
- generating (32), in response to said pulses (22), an oscillating signal (24, 25, 26) at a first frequency, said first frequency being lower by no more than 20% than said pulse repetition frequency;
- measuring (33) the amplitude of said oscillating signal (24, 25, 26);
- discriminating (37) the presence of said first type of transponder (20) with respect to the presence of said second type of transponder (21) on the basis of a negative and positive variation, respectively, of the amplitude of said oscillating signal (25, 26) with respect to the amplitude of said oscillating signal (24) in the absence of said transponders.

8. The method according to claim 7, , the method furthermore comprising a step (39) for reading/writing the first type of transponder (20) only if said variation of the amplitude of the oscillating signal (25) is negative or a step (38) for reading/writing said second type of transponder (21) only if said amplitude variation of the oscillating signal (26) is positive.

9. The method according to claim 7 or 8, further comprising a step (35) of interrupting said generation (31) of pulses when said variation of the amplitude of the oscillating signal (25, 26) is detected.

## Patentansprüche

1. Vorrichtung (1), die ausgebildet ist zum Erkennen der Anwesenheit von zumindest einer ersten Art von Transponder (20) und einer zweiten Art von Transpondern (21) in unmittelbarer Nähe der Vorrichtung, wobei die erste Art von Transponder (20) mit einer Hochfrequenz arbeitet und die zweite Art von Transponder (21) mit einer Niederfrequenz arbeitet, wobei die Vorrichtung (1) aufweist:
- einen Pulsgenerator (8), der ausgebildet ist, um Pulse (22) in einer voreingestellten Pulsfrequenz zu erzeugen;
- einen ersten Resonator (4), der auf eine erste Resonanzfrequenz abgestimmt ist und der mit dem Pulsgenerator (8) verbunden ist, um ein oszillierendes Signal (24, 25, 26) in Antwort auf die Pulse (22) zu erzeugen; und
- eine Schaltung (5), die mit dem ersten Resonator (4) verbunden ist, zum Messen der Amplitude des oszillierenden Signals (24, 25, 26);
**dadurch gekennzeichnet, dass** die erste Resonanzfrequenz um nicht mehr als 20 % niedriger ist als die Pulsfrequenz, wobei die Vorrichtung (1) Mittel (12) zum Erkennen der Anwesenheit der ersten Art von Transponder (20) oder der zweiten Art von Transponder (21) aufweist, wobei diese Mittel (12) dazu ausgebildet sind, um die Anwesenheit der ersten Art von Transponder (20) gegenüber der Anwesenheit der zweiten Art von Transponder (21) auf der Grundlage einer negativen beziehungsweise positiven Variation der Amplitude des oszillierenden Signals (25, 26) gegenüber der Amplitude des oszillierenden Signals (24) in Abwesenheit der Transponder zu unterscheiden.

2. Vorrichtung nach einem oder mehreren der voranstehenden Ansprüche, **dadurch gekennzeichnet, dass** die Pulsgeneratorschaltung (8) einen Oszillator (17) aufweist, der in der Pulsfrequenz arbeitet.

3. Vorrichtung nach einem oder mehreren der voranstehenden Ansprüche, wobei die Hochfrequenz im Wesentlichen einer Frequenz von 13,56 MHz entspricht und die Niederfrequenz wischen 119 kHz und 135 kHz liegt.

4. Vorrichtung nach einem oder mehreren der voranstehenden Ansprüche, **dadurch gekennzeichnet, dass** sie aufweist:
- eine Verarbeitungseinheit (12), die mit der Messschaltung (5) und dem Pulsgenerator (8) verbunden ist;
- einen zweiten Resonator (11), der auf die zweite Resonanzfrequenz abgestimmt ist, die im Wesentlichen der Niederfrequenz entspricht;
- eine erste Lese-/Schreibschaltung (3) der ersten Art von Transponder (20), die mit dem ersten Resonator (4) verbunden ist;
- eine zweite Lese-/Schreibschaltung (5) der zweiten Art von Transponder (21), die mit dem zweiten Resonator (11) verbunden ist;
wobei die Verarbeitungseinheit (12) dazu ausgebildet ist, um nur die erste Lese-/Schreibschaltung (3) oder nur die zweite Lese-/Schreibschaltung (9) zu versorgen, wenn die Variation der Amplitude des oszillierenden Signals (25, 26) negativ beziehungsweise positiv ist.

5. Vorrichtung nach einem oder mehreren der voranstehenden Ansprüche, **dadurch gekennzeichnet, dass** die Verarbeitungseinheit (12) darüber hinaus ausgebildet ist, um den Pulsgenerator (8) zu deaktivieren, wenn die Messschaltung (5) die Amplitudenvariation des oszillierenden Signals (25, 26) erkennt.

6. Vorrichtung nach einem oder mehreren der voranstehenden Ansprüche, wobei der Pulsgenerator (8) ausgebildet ist, um Pakete (23) von Pulsen (22) periodisch zu generieren und um die Erzeugung der Pulse (22) periodisch zu unterbrechen, wobei die Pakete (23) von Pulsen (22) eine solche Dauer haben, dass sie einen Energietransfer zu dem ersten Resonator (4) ermöglichen, sodass die Amplitude des oszillierenden Signals (24, 25, 26) durch die Messschaltung (5) erkennbar ist.

7. Verfahren zum Erkennen der Anwesenheit von zumindest einer ersten Art von Transponder (20) und einer zweiten Art von Transponder (21), wobei die erste Art von Transponder (20) mit einer Hochfrequenz arbeitet und die zweite Art von Transponder (21) mit einer Niederfrequenz arbeitet, wobei das Verfahren die Schritte aufweist:
- Erzeugen (31) von Pulsen (22) in einer voreingestellten Pulsfrequenz;
- Erzeugen (32) eines oszillierenden Signals (24, 25, 26) in einer ersten Frequenz in Antwort auf die Pulse (22), wobei die erste Frequenz um nicht weniger als 20 % geringer ist als die Pulsfrequenz;
- Messen (33) der Amplitude des oszillierenden Signals (24, 25, 26);
- Unterscheiden (37) der Anwesenheit der ersten Art von Transponder (20) gegenüber der Anwesenheit der zweiten Art von Transponder (21) auf Grundlage einer negativen bzw. positiven Variation der Amplitude des oszillierenden Signals (25, 26) gegenüber der Amplitude des oszillierenden Signals (24) in Abwesenheit des Transponders.

8. Verfahren nach Anspruch 7, wobei das Verfahren darüber hinaus einen Schritt (39) des Lesens/Schreibens der ersten Art von Transponder (20), nur wenn die Variation der Amplitude des oszillierenden Signals (25) negativ ist, oder einen Schritt (38) des Lesens/Schreibens der zweiten Art von Transpondern (21), nur wenn die Amplitudenvariation des oszillierenden Signals (26) positiv ist, aufweist.

9. Verfahren nach einem der Ansprüche 7 oder 8, das weiterhin den Schritt (35) des Unterbrechens des Erzeugens (31) von Pulsen aufweist wenn die Variation der Amplitude des oszillierenden Signals (25, 26) erkannt wird.

## Revendications

1. Dispositif (1) adapté à détecter la présence, à proximité dudit dispositif (1), d'au moins un parmi un premier type de transpondeur (20) et un second type de transponder (21), ledit premier type de transpondeur (20) fonctionnant à haute fréquence et ledit second type de transpondeur (21) fonctionnant à basse fréquence, ledit dispositif (1) comprenant :
- un générateur d'impulsions (8), qui est adapté à générer des impulsions (22) à une fréquence de répétition préréglée,
- un premier résonateur (4), qui est accordé à une première fréquence de résonance et relié audit générateur d'impulsions (8) de façon à générer un signal oscillant (24, 25, 26) en réponse auxdites impulsions (22), et
- un circuit (5) pour mesurer l'amplitude dudit signal oscillant (24, 25, 26), circuit, qui est relié audit premier résonateur (4),
**caractérisé en ce que** ladite première fréquence de résonance est inférieure d'au plus 20% à ladite fréquence de répétition d'impulsions, ledit dispositif (1) comprenant des moyens (12) pour détecter la présence dudit premier type de transpondeur (20) ou dudit second type de transpondeur (21), lesdits moyens (12) étant adaptés à faire la distinction entre la présence dudit premier type de transpondeur (20) et la présence dudit second type de transpondeur (21) sur la base d'une variation respectivement négative et positive de l'amplitude dudit signal oscillant (25, 26) par rapport à l'amplitude dudit signal oscillant (24) en l'absence desdits transpondeurs.

2. Dispositif suivant une ou plusieurs des revendications précédentes, **caractérisé en ce que** ledit circuit de génération d'impulsion (8) comprend un oscillateur (17) qui fonctionne à ladite fréquence de répétition.

3. Dispositif suivant une ou plusieurs des revendications précédentes, dans lequel ladite haute fréquence est essentiellement égale à 13.56 MHz et ladite basse fréquence est comprise entre 119 kHz et 135 kHz.

4. Dispositif suivant une ou plusieurs des revendications précédentes, **caractérisé en ce qu'**il comprend :
- une unité de traitement (12), qui est reliée audit circuit de mesure (5) et audit générateur d'impulsions (8),
- un second résonateur (11), qui est accordé sur une seconde fréquence de résonance qui est essentiellement égale à ladite basse fréquence,
- un premier circuit de lecture/écriture (3) dudit premier type de transpondeur (20) relié audit premier résonateur (4),
- un second circuit de lecture/écriture (5) dudit second type de transpondeur (21) relié audit second résonateur (11),
ladite unité de traitement (12) étant adaptée à fournir seulement le premier circuit de lecture/écriture (3) ou seulement le second circuit de lecture/écriture (9) si ladite variation de l'amplitude dudit signal oscillant (25, 26) est respectivement négative ou positive.

5. Dispositif suivant une ou plusieurs des revendications précédentes, **caractérisé en ce que** ladite unité de traitement (12) est, en outre, adaptée à désactiver ledit générateur d'impulsions (8), lorsque ledit circuit de mesure (5) détecte ladite variation d'amplitude du signal oscillant (25, 26).

6. Dispositif suivant une ou plusieurs des revendications précédentes, dans lequel ledit générateur d'impulsions (8) est adapté à générer périodiquement des paquets (23) desdites impulsions (22) et à interrompre périodiquement la génération desdits impulsions (22), lesdits paquets (23) d'impulsions (22) ayant une durée permettant un transfert d'énergie au premier résonateur (4) de façon que l'amplitude dudit signal oscillant (24, 25, 26) peut être détecté par ledit circuit de mesure (5).

7. Procédé de détection de la présence d'au moins un parmi un premier type de transpondeur (20) et un second type de transpondeur (21), ledit premier type de transpondeur (20) fonctionnant à haute fréquence et ledit second type de transponder (21) fonctionnant à basse fréquence, comprenant les étapes suivantes qui consistent à :
- générer (31) des impulsions (22) à une fréquence de répétition préréglée,
- générer (32), en réponse auxdites impulsions (22), un signal oscillant (24, 25, 26) à une première fréquence, ladite première fréquence étant inférieure d'au plus 20% à ladite fréquence de répétition d'impulsions,
- mesurer (33) l'amplitude dudit signal oscillant (24, 25, 26),
- distinguer (37) la présence dudit premier type de transpondeur (20) par rapport à la présence dudit second type de transpondeur (21) sur la base d'une variation respectivement négative et positive de l'amplitude dudit signal oscillant (25, 26) par rapport à l'amplitude dudit signal oscillant (24) en l'absence desdits transpondeurs.

8. Procédé suivant la revendication 7, ledit procédé comprenant, en outre, une étape (39), qui consiste à lire/écrire ledit premier type de transpondeur (20) seulement si ladite variation d'amplitude du signal oscillant (25) est négative, ou une étape (38), qui consiste à lire/écrire ledit second type de transpondeur (21) seulement si ladite variation d'amplitude du signal oscillant (26) est positive.

9. Procédé suivant la revendication 7 ou 8, comprenant, en outre, une étape (35), qui consiste à interrompre ladite génération (31) d'impulsions, lorsque ladite variation de l'amplitude dudit signal oscillant (25, 26) est détectée.
